# EUROPEAN PATENT APPLICATION

(11) **EP 2 830 300 A1**
(43) Date of publication of application: **28.01.2015**
(21) Application number: 13763889.6
(22) Date of filing: 30.01.2013
(51) Int. Cl.: H04M 11/00, G08G 1/09, H04W 4/04

(54) **COMMUNICATION DEVICE, METHOD FOR IDENTIFYING IDENTIFICATION INFORMATION BELONGING TO COMMUNICATION PARTNER, METHOD FOR TRANSMITTING REPLY INFORMATION, AND RECORDING MEDIUM**

(30) Priority: 19.03.2012 JP 2012061666
(71) Applicant: NEC Corporation, Tokyo 108-8001 (JP)
(72) Inventor: YAMAMOTO, Takeshi, Tokyo 1088001 (JP)
(74) Representative: Vossius & Partner
(86) International application number: PCT/JP2013/052014
(87) International publication number: WO 2013/140861

(57) **Abstract**

A communication device communicating with a communication partner includes storing means that stores answer information corresponding to prescribed query information, transmission means that broadcasts the prescribed query information; reception means that receives reply information that includes response information to the prescribed query information, and communication identification information about a transmission source of the response information, and control means that identifies the communication identification information about the transmission source of the response information as communication identification information about the communication partner, if the response information matches the answer information.

## Description

### Technical Field

The present invention relates to a communication device that performs wireless communication, a method for identifying communication partner identification information, a method for transmitting reply information, and a recording medium. For instance, the present invention relates to a communication device that communicates with another communication device mounted on a vehicle as a vehicle-mounted device, a method for identifying communication partner identification information, a method for transmitting reply information, and a recording medium.

### Background Art

Vehicle-to-vehicle communication, which is communication between a vehicle and a vehicle, has been known. In vehicle-to-vehicle communication, communication devices mounted on vehicles wirelessly communicate with each other.

Patent Literature 1 describes a wireless data transceiver device that performs wireless communication using an IP (Internet Protocol) address as communication identification information about a communication device mounted on a vehicle. The wireless data transceiver device that is described in Patent Literature 1 designates a communication partner using communication identification information about a communication partner, and performs one-to-one communication with the communication partner.

### Citation List

### Patent Literature

Patent Literature 1: JP4296911B

### Summary of Invention

### Technical Problem

Communication identification information about a communication device that is used for vehicle-to-vehicle communication is sometimes changed in order to protect the privacy of a user of the communication device.

Accordingly, if communication identification information about a communication partner (e.g., an IP address) is changed, a wireless data transceiver device described in Patent Literature 1 cannot identify the communication partner, and it becomes difficult to communicate with the communication partner.

There is thus a problem in that a method for acquiring new communication identification information about the communication partner is desired.

It is an object of the present invention to provide a communication device, a method for identifying communication partner identification information, a method for transmitting reply information and a recording medium that can solve the foregoing problem.

### Solution to Problem

A communication device according to the present invention is a communication device communicating with a communication partner, including:
storing means that stores answer information corresponding to prescribed query information;
transmission means that broadcasts the prescribed query information;
reception means that receives reply information that includes response information to the prescribed query information, and communication identification information about a transmission source of the response information; and
control means that identifies the communication identification information about the transmission source of the response information as communication identification information about the communication partner, if the response information matches the answer information.

A communication device according to the present invention is a vehicle-mounted communication device, including:
update means that updates communication identification information about the communication device;
storing means that stores answer information corresponding to prescribed query information; and
communication control means that, upon receipt of the prescribed query information, transmits, to a transmission source of the prescribed query information, reply information that includes latest communication identification information about the communication device and further includes the answer information as response information to the prescribed query information.

A method for identifying communication partner identification information according to the present invention is a method for identifying a communication partner in a communication device communicating with a communication partner, the method including:
storing answer information corresponding to prescribed query information in storing means;
broadcasting the prescribed query information;
receiving reply information that includes response information to the prescribed query information, and communication identification information about a transmission source of the response information; and
identifying the communication identification information about the transmission source of the response information as communication identification information about the communication partner, if the response information matches the answer information.

A method for transmitting reply information according to the present invention is a method for transmitting reply information in a vehicle-mounted communication device, the method including
updating communication identification information about the communication device;
storing answer information corresponding to prescribed query information in storing means; and
upon receipt of the prescribed query information, transmitting, to a transmission source of the prescribed query information, reply information that includes latest communication identification information about the communication device and further includes the answer information as response information to the prescribed query information.

A recording medium according to the present invention is a computer-readable recording medium storing a program for causing a computer to execute:
a storing procedure of storing answer information corresponding to prescribed query information in storing means;
a transmission procedure of broadcasting the prescribed query information;
a reception procedure of receiving reply information that includes response information to the prescribed query information, and communication identification information about a transmission source of the response information; and
an identification procedure of identifying the communication identification information about the transmission source of the response information as communication identification information about the communication partner, if the response information matches the answer information.

A recording medium according to the present invention is a computer-readable recording medium storing a program for causing a computer to execute:
an update procedure of updating communication identification information about the computer;
a storing procedure of storing answer information corresponding to prescribed query information in storing means; and
a communication procedure of, upon receipt of the prescribed query information, transmitting, to a transmission source of the prescribed query information, reply information that includes latest communication identification information about the computer and further includes the answer information as response information to the prescribed query information.

### Advantageous Effects of Invention

The present invention can acquire new communication identification information about a communication partner.

### Brief Description of Drawings

[Figure 1] Figure 1 is a block diagram showing communication device 100 of one exemplary embodiment.
[Figure 2] Figure 2 is a diagram showing an example of passwords (query information and answer information) in storage 2.
[Figure 3] Figure 3 is a sequence diagram for illustrating operation of communication device 100.
[Figure 4] Figure 4 is a diagram showing communication device 100 that includes storage 2, transmitter 3, receiver 4 and controller 5.
[Figure 5] Figure 5 is a diagram showing communication device 100 that includes updater 1, storage 2 and communication controller 6.

### Description of Embodiments

Exemplary embodiments according to the present inventin are hereinafter described with reference to the drawings.

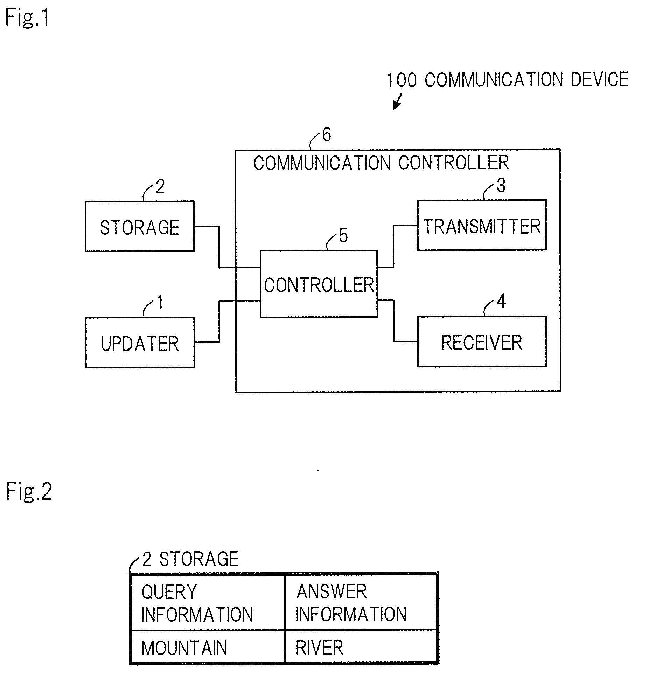

Figure 1 is a block diagram showing communication device 100 of one exemplary embodiment according to the present invention.

For instance, communication device 100 is mounted on a vehicle, and performs vehicle-to-vehicle communication. Communication device 100 may be used as a road-side device that communicates with another communication device mounted on a vehicle.

In Figure 1, communication device 100 includes updater 1, storage 2, transmitter 3, receiver 4 and controller 5. Transmitter 3, receiver 4 and controller 5 are included in communication controller 6.

Updater 1 is an example of update means. Updater 1 holds communication identification information (hereinafter, referred to as "ID") for communication device 100, and updates the ID. Updater 1 updates the ID periodically (e.g., every one minute, every thirty minutes, or every one hour). Updater 1 may update the ID when a power voltage is supplied to communication device 100. Updater 1 holds the updated ID. The ID is used to identify communication device 100 during communication. The ID may be, for instance, an IP address.

Storage 2 is an example of storing means. Storage 2 stores query information that represents a predetermined query, and answer information that represents an answer corresponding to the query. The query information in storage 2 is an example of prescribed query information. The answer information in storage 2 is an example of the answer information corresponding to the prescribed query information. Hereinafter, the query information and the answer information are comprehensively referred to as "passwords".

Figure 2 is a diagram showing an example of passwords (query information and answer information) in storage 2.

In Figure 2, "mountain" that is query information, and "river" that is answer information corresponding to the query information, or "mountain", are associated with each other. The passwords are not limited to the pair of character strings that include the query information and the answer information. Alternatively, for instance, a pair of number strings (e.g., query information that is "0101025", and answer information that is "1113728") may be adopted. The passwords are appropriately modified.

Transmitter 3 is an example of transmission means. Transmitter 3 transmits various pieces of information (e.g., question information that includes query information, and reply information about question information) to another communication device 100.

Receiver 4 is an example of reception means. Receiver 4 receives various pieces of information (e.g., question information and reply information about the question information) transmitted from another communication device 100.

Controller 5 is an example of control means. Controller 5 controls the operation of communication device 100.

Communication controller 6 is an example of communication control means. Communication controller 6 controls the communication operation of communication device 100.

Next, the operation is described.

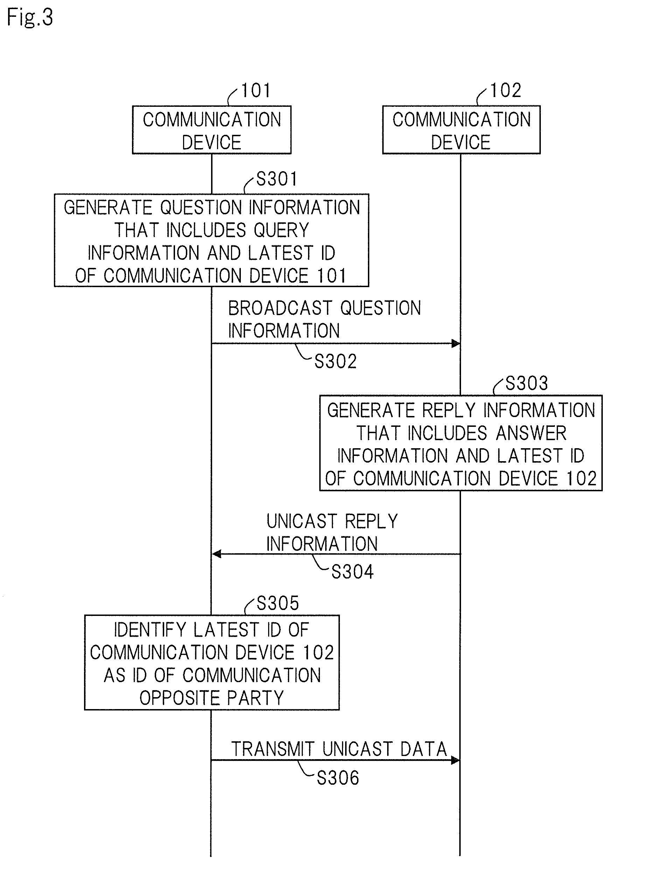

Figure 3 is a sequence diagram for illustrating the operation of communication device 100. Figure 3 shows the communication operation between two communication devices 101 and 102. Each of communication devices 101 and 102 has the same configuration as communication device 100 shown in Figure 1.

It is provided that storage 2 in communication device 101 and storage 2 in communication device 102 each store, as passwords, query information that is "mountain" and answer information that is "river", which are shown in Figure 2. For instance, a user of communication device 101 and a user of communication device 102 preliminarily define passwords and then the user of communication device 101 registers the passwords in storage 2 in communication device 101 while the user of communication device 102 registers the passwords in storage 2 in communication device 102. The procedures for registering the passwords are not limited to the foregoing implementation. Alternatively, the procedures may be appropriately modified.

The operation where communication device 101 acquires the ID of communication device 102 is hereinafter described.

At a prescribed timing, controller 5 in communication device 101 reads query information that is "mountain" from storage 2 in communication device 101, and reads the latest ID of communication device 101 from updater 1 in communication device 101.

The prescribed timing is, for instance, a periodic timing, a timing at which communication with communication device 102 is started, or a timing at which updater 1 in communication device 101 updates an ID.

For instance, controller 5 in communication device 101 recognizes a timing at which an input section, which is not shown, accepts a communication start instruction to start communication with communication device 102, as a timing at which communication with communication device 102 is started.

For instance, controller 5 in communication device 101 monitors the ID that is held in updater 1 in communication device 101, and detects a timing at which updater 1 in communication device 101 updates the ID. In the case of outputting update notification to controller 5 in communication device 101 when updater 1 in communication device 101 updates the ID, controller 5 in communication device 101 may recognize a timing at which the update notification is accepted, as a timing at which updater 1 in communication device 101 updates the ID.

Subsequently, controller 5 in communication device 101 generates question information that includes query information, or "mountain", and the latest ID of communication device 101 (step S301), and outputs the question information to transmitter 3 in communication device 101.

Upon accepting the question information, transmitter 3 in communication device 101 broadcasts the question information (step S302).

For instance, procedures for broadcasting question information are executed similarly as with procedures for Service Advertisement (SA: program guide transmission) where a road-side device broadcasts road-side device information (information representing CH in use etc.) to vehicle-mounted devices therearound.

When receiver 4 in communication device 102 receives question information transmitted from communication device 101, receiver 4 outputs the question information to controller 5 in communication device 102.

When controller 5 in communication device 102 receives the question information, controller 5 reads query information that is "mountain", from question information.

Subsequently, controller 5 in communication device 102 determines whether or not the query information that is "mountain" is present in storage 2 in communication device 102.

If the query information, or "mountain", is not present in storage 2 in communication device 102, controller 5 in communication device 102 finishes communication concerning the question information.

On the contrary, if query information, or "mountain", is present in storage 2 in communication device 102, controller 5 in communication device 102 reads answer information, or "river", corresponding to the query information, or "mountain", from storage 2 in communication device 102, and reads the latest ID of communication device 102 from updater 1 in communication device 102. Figure 3 shows the operation for the case where the query information, or "mountain", is present in storage 2 in communication device 102.

Subsequently, controller 5 in communication device 102 generates reply information that includes the latest ID of communication device 102, and the answer information, or "river", as response information to the query information, or "mountain" (step S303).

Next, controller 5 in communication device 102 sets the destination of the reply information as the latest ID of communication device 101 included in the question information.

Subsequently, controller 5 in communication device 102 outputs the reply information, in which the destination is set, to transmitter 3 in communication device 102.

When transmitter 3 in communication device 102 accepts the reply information, in which the destination is set, transmitter 3 unicasts the reply information to the set destination, i.e., communication device 101 (step S304).

When receiver 4 in communication device 101 receives the reply information transmitted from communication device 102, receiver 4 outputs the reply information to controller 5 in communication device 101.

When controller 5 in communication device 101 accepts the reply information, controller 5 reads answer information, or "river", having been set as response information, from the reply information.

Subsequently, controller 5 in communication device 101 determines whether or not the answer information, or "river", that was read from the reply information is present in storage 2 in communication device 102.

If the answer information, or "river", is not present in storage 2 in communication device 101, controller 5 in communication device 101 determines that the transmission source of the reply information is not an authorized communication partner, i.e., communication device 102, and finishes the communication concerning the reply information.

On the contrary, if the answer information, or "river", exists in storage 2 in communication device 101, controller 5 in communication device 101 determines that the transmission source of the reply information is an authorized communication partner, i.e., communication device 102, reads the latest ID of communication device 102 from the reply information, and identifies the ID as the ID of communication device 102, which is the communication partner (step S305). Figure 3 shows the operation for the case where the answer information, or "river", is present in storage 2 in communication device 101.

After controller 5 in communication device 101 identifies the ID of the communication partner, controller 5 designates the communication partner using the ID, and performs unicast communication with the communication partner (step S306).

After controller 5 in communication device 101 identifies the ID of the communication partner, controller 5 broadcasts a position request to request current positions from communication devices therearound, receives, from the communication devices therearound, position information that is a response to the position request. Subsequently, unicast communication may be performed with the communication partner using the ID of the communication partner and position information.

Next, advantageous effects of this exemplary embodiment are described.

In this exemplary embodiment, storage 2 stores the answer information corresponding to the query information. Transmitter 3 broadcasts the query information stored in storage 2. Receiver 4 receives the reply information that includes the response information to the query information and the ID (communication identification information) of the transmission source of the response information. If the response information in the reply information matches the answer information in storage 2, controller 5 identifies the ID of the transmission source of the response information as the ID of the communication partner.

Accordingly, even if the ID of the communication partner that recognizes the answer information corresponding to the query information is changed, the new ID of the communication partner can be acquired.

The advantageous effects are also exerted by communication device 100 that includes storage 2, transmitter 3, receiver 4 and controller 5.

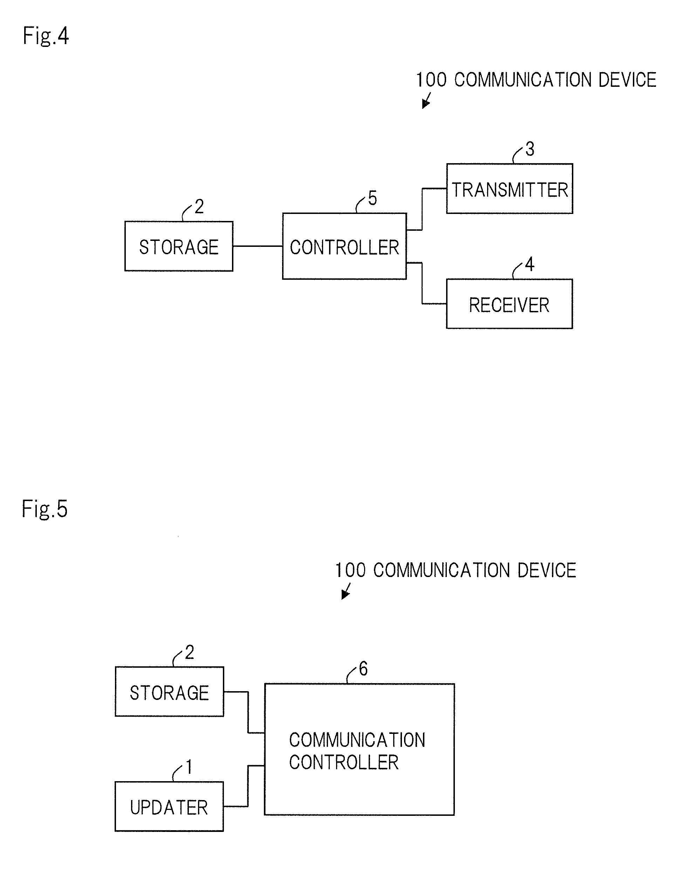

Figure 4 is a diagram showing communication device 100 that consists of storage 2, transmitter 3, receiver 4 and controller 5.

In this exemplary embodiment, controller 5 communicates with the communication partner via transmitter 3 and receiver 4 using the ID of the communication partner.

Thus, use of the new ID of the communication partner allows communication with the communication partner.

A situation is assumed where only one communication device (hereinafter, referred to as "communication device 200") stores passwords identical to the passwords stored in communication device 100. In this situation, if receiver 4 receives pieces of reply information that include response information that matches the answer information, there is a possibility that the answer information transmitted from communication device 200 will be unauthorizedly acquired by another communication device, and that reply information including unauthorizedly acquired answer information will be transmitted.

Accordingly, when the input section, which is not shown, accepts, from the user, first communication partner information in which the number of communication partners is one and when receiver 4 receives pieces of reply information that include response information that matches the answer information within a prescribed time period (e.g., five seconds), controller 5 may identify the ID of the transmission source of the response information included in reply information having been received earliest among the pieces of reply information, as the ID of the communication partner. The prescribed time period is not limited to five seconds. Alternatively this period can be appropriately modified.

In this case, the ID of an authorized communication partner can be acquired, and communication with a communication device having unauthorizedly acquired answer information can be prevented.

In a situation where communication devices store passwords identical to the passwords stored in communication device 100, it can be thought that receiver 4 receives pieces of reply information that include response information that matches the answer information within a prescribed time period.

Accordingly, when the input section, not shown, accepts second communication partner information in which the number of communication partners is more than one and when receiver 4 receives pieces of reply information that include response information that matches answer information within a prescribed time period, controller 5 may identify the ID of the transmission source of the response information included in each piece of reply information as the ID of each communication partner.

In this case, if question information is transmitted only once, the IDs of communication partners can be acquired.

In this exemplary embodiment, updater 1 updates the ID of communication device 100. Storage 2 stores the answer information corresponding to the query information. Upon receipt of the query information, communication controller 6 transmits, to the transmission source of the query information, reply information that includes the latest ID of communication device 100, and that includes answer information in storage 2 as response information to the query information.

Thus, the latest ID of the device itself, together with the answer information corresponding to the query information, can be notified to the transmission source of the query information.

The foregoing advantageous effects can be exerted by communication device 100 that consists of updater 1, storage 2 and communication controller 6.

Figure 5 is a diagram showing communication device 100 that consists of updater 1, storage 2 and communication controller 6.

In the case where communication device 100 is used as a road-side device that communicates with another communication device mounted on a vehicle, updater 1 does not need to update the ID of communication device 100. In the case where storage 2 stores the ID of communication device 100, updater 1 may be omitted.

Communication device 100 may be implemented with a computer. In this case the computer reads and executes a program recorded in a recording medium, such as computer-readable CD-ROM (Compact Disk Read Only Memory), and functions as updater 1, storage 2, transmitter 3, receiver 4 and controller 5. The recording medium is not limited to CD-ROM. Alternatively, this medium may be appropriately changed.

In the exemplary embodiments having been described above, the illustrated configurations are exemplary only. The present invention is not limited to these configurations.

The invention of this application has been described with reference to the exemplary embodiments. However, the invention of this application is not limited to the foregoing exemplary embodiments. The configuration and details of the invention of this application are open to various modifications within the scope of the invention that will be clear to one of ordinary skill in the art. This application claims the priority right based on Japanese Patent Application No. 2012-61666 filed March 19, 2012, the disclosure of which is incorporated herein by reference in its entirety.

### Reference Signs List

- 100: Communication device
- 1: Updater
- 2: Storage
- 3: Transmitter
- 4: Receiver
- 5: Controller
- 6: Communication controller

## Claims

1. A communication device communicating with a communication partner, comprising:
storing means that stores answer information corresponding to prescribed query information;
transmission means that broadcasts the prescribed query information;
reception means that receives reply information that includes response information to the prescribed query information, and communication identification information about a transmission source of the response information; and
control means that identifies the communication identification information about the transmission source of the response information as communication identification information about the communication partner, if the response information matches the answer information.

2. The communication device according to claim 1, wherein when said reception means receives pieces of reply information that include response information matching the answer information, said control means identifies communication identification information about a transmission source of response information included in a piece of reply information having been received earliest among the pieces of reply information as the communication identification information about the communication partner.

3. The communication device according to claim 1,
wherein the number of communication partners is more than one, and
when said reception means receives pieces reply information that include response information matching the answer information within a prescribed time period, said control means identifies communication identification information about the transmission source of the response information included in each piece of reply information as communication identification information about each communication partner.

4. The communication device according to any one of claims 1 to 3, wherein said control means designates the communication partner using communication identification information about the communication partner, and communicates with the communication partner.

5. The communication device according to any one of claims 1 to 4, further comprising
update means that updates the communication identification information about said communication device,
wherein when said reception means receives the prescribed query information, said control means causes said transmission means to transmit, to a transmission source of the prescribed query information, reply information that includes latest communication identification information about said communication device and further includes the answer information as response information to the prescribed query information.

6. A vehicle-mounted communication device, comprising:
update means that updates communication identification information about said communication device;
storing means that stores answer information corresponding to prescribed query information; and
communication control means that, upon receipt of the prescribed query information, transmits, to a transmission source of the prescribed query information, reply information that includes latest communication identification information about said communication device and further includes the answer information as response information to the prescribed query information.

7. A method for identifying a communication partner in a communication device communicating with a communication partner, the method comprising:
storing answer information corresponding to prescribed query information in storing means;
broadcasting the prescribed query information;
receiving reply information that includes response information to the prescribed query information, and communication identification information about a transmission source of the response information; and
identifying the communication identification information about the transmission source of the response information as communication identification information about the communication partner, if the response information matches the answer information.

8. A method for transmitting reply information in a vehicle-mounted communication device, the method comprising:
updating communication identification information about said communication device;
storing answer information corresponding to prescribed query information in storing means; and
upon receipt of the prescribed query information, transmitting, to a transmission source of the prescribed query information, reply information that includes latest communication identification information about said communication device and further includes the answer information as response information to the prescribed query information.

9. A computer-readable recording medium storing a program for causing a computer to execute:
a storing procedure of storing answer information corresponding to prescribed query information in storing means;
a transmission procedure of broadcasting the prescribed query information;
a reception procedure of receiving reply information that includes response information to the prescribed query information, and communication identification information about a transmission source of the response information; and
a control procedure of identifying the communication identification information about the transmission source of the response information as communication identification information about the communication partner, if the response information matches the answer information.

10. A computer-readable recording medium storing a program for causing a computer to execute:
an update procedure of updating communication identification information about said computer;
a storing partner of storing answer information corresponding to prescribed query information in storing means; and
a communication procedure of, upon receipt of the prescribed query information, transmitting, to a transmission source of the prescribed query information, reply information that includes latest communication identification information about said computer and further includes the answer information as response information to the prescribed query information.
